# EUROPÄISCHE PATENTANMELDUNG

(11) **EP 0 719 042 A2**
(43) Veröffentlichungstag der Anmeldung: **26.06.1996**
(21) Anmeldenummer: 95120002.1
(22) Anmeldetag: 18.12.1995
(51) Int. Cl.: H04N 5/68

(54) **Anordnung mit einer Lochmasken-Farbbildröhre**

(30) Priorität: 20.12.1994 DE 9420386 U
(71) Anmelder: SIEMENS AKTIENGESELLSCHAFT, D-80333 München (DE)
(72) Erfinder: Homberg, Bernd, D-76767 Hagenbach (DE)

(57) **Zusammenfassung**

Die Erfindung betrifft eine Anordnung mit einer Lochmasken-Farbbildröhre, deren Lochmaske mehrere horizontale Lochreihen aufweist, welche die Elektronenstrahlen eines Elektronenstrahlerzeugers beim Schreiben der Zeilen auf eine Leuchtschicht der Röhre passieren, wobei der Abstand der Mitten zweier benachbarter Lochreihen gleich dem halben Lochabstand ist, und mit einer Einrichtung (4) zur Ablenkung des Elektronenstrahls in vertikaler und horizontaler Richtung. Die Einrichtung (4) ist mit geeigneten Mitteln versehen, um unabhängig von der Bildauflösung Moiré-Effekte weitgehend zu vermeiden.

Die Erfindung wird angewandt in der Bildtechnik.

## Beschreibung

Die Erfindung betrifft eine Anordnung mit einer Lochmasken-Farbbildröhre, deren Lochmaske mehrere horizontale Lochreihen aufweist, welche die Elektronenstrahlen eines Elektronenstrahlerzeugers beim Schreiben der Zeilen auf eine Leuchtschicht der Röhre passieren, wobei der Abstand der Mitten zweier benachbarter Lochreihen gleich dem halben Lochabstand ist, und mit einer Einrichtung zur Ablenkung des Elektronenstrahls in vertikaler und horizontaler Richtung.

Eine derartige Anordnung ist aus der Druckschrift "Farbfernsehtechnik", B. Morgenstern, 4. Auflage, 1994, Kapitel 5 bekannt. Dort entstehen zwischen den Zeilen und den Lochreihen Interferenzen, welche als störendes Muster (Moiré) auf dem Bildschirm erscheinen. Durch geeignete Wahl des Verhältnisses zwischen dem Abstand zweier benachbarter Zeilenmittenlinien und dem Lochabstand (in Strahlrichtung auf Bildschirm projiziert) wird die sogenannte Moiré-Wellenlänge klein gehalten, damit störende Interferenzen bei einer Bildbetrachtung aus einiger Entfernung nicht mehr zu erkennen sind. In Lochmasken-Farbbildröhren, welche der europäischen Norm genügen (625 Zeilenperioden je Bildperiode, 63-cm-Bildschirmdiagonale) ist daher ein Lochabstand von etwa 0,77 mm vorgesehen, wobei der Lochdurchmesser in der Bildschirmmitte ca. 0,33 beträgt. Dagegen müssen Lochmasken-Farbbildröhren nach amerikanischer Norm (ebenfalls bei 63-cm-Bildschirmdiagonale) einen Lochabstand von ca. 0,7 mm und einen Lochdurchmesser von ca. 0,3 mm in der Bildschirmmitte aufweisen.

Der vorliegenden Erfindung liegt die Aufgabe zugrunde, eine Anordnung der eingangs genannten Art zu schaffen, in welcher unabhängig von der Bildauflösung Moiré-Effekte weitgehend vermieden werden.

Diese Aufgabe wird dadurch gelöst, daß die Einrichtung mit Mitteln versehen ist, welche die Zeilen in vertikaler Richtung mit einer Verschiebefrequenz derart um ein Viertel des Lochabstandes verschieben, daß die Intensität der Helligkeit auf der Leuchtschicht der Röhre in vertikaler Richtung im zeitlichen Mittel weitgehend gleichmäßig verteilt ist. Dadurch ist für einen Betrachter kein Moiré mehr auf dem Bildschirm wahrzunehmen.

Anhand der Zeichnung, in der ein Ausführungsbeispiel der Erfindung dargestellt ist, werden die Erfindung sowie Weiterbildungen und Vorteile näher beschrieben und erläutert.

Es zeigen
- Figur 1: ein Prinzipschaltbild einer Monitoranordnung und
- Figur 2: eine an sich bekannte Lochmaske.

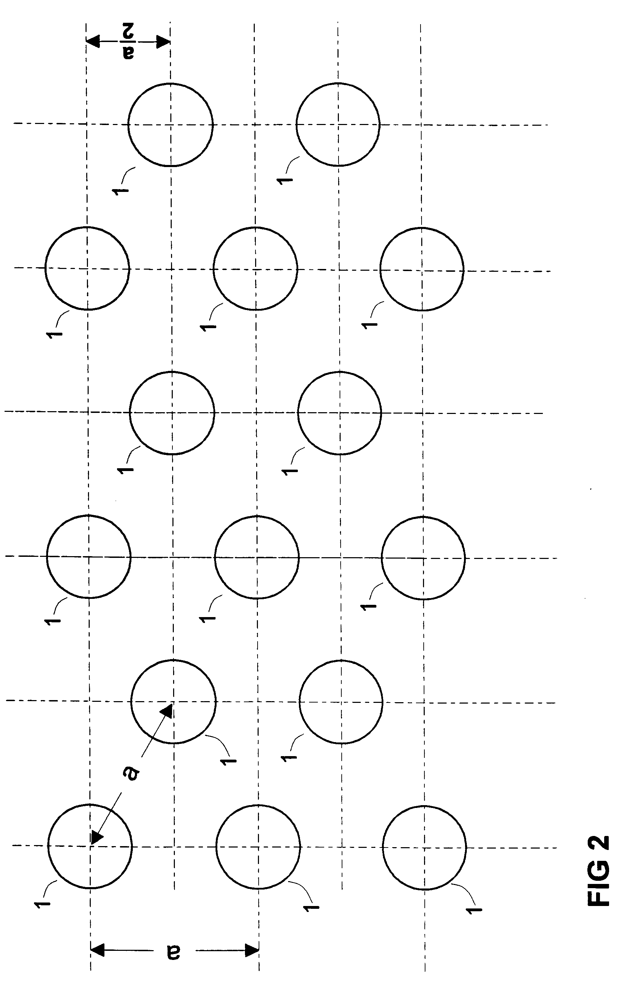

Zunächst wird auf Figur 2 verwiesen. Mit 1 sind die Löcher der Lochmaske einer Farbbildröhre bezeichnet, welche in einem Abstand a angeordnet sind. Der Abstand der Mitten zweier benachbarter, horizontaler Lochreihen beträgt jeweils einen halben Lochabstand. Jedem Loch der Lochmaske sind drei Leuchtstoffpunkte (Leuchtpunkttripel) auf einer hier nicht dargestellten Leuchtschicht der Röhre zugeordnet, wobei je ein Elektronenstrahl einen Leuchtpunkt zum Leuchten anregt. Dabei durchdringen die Elektronenstrahlen beim Schreiben der Zeilen auf der Leuchtschicht die Löcher der horizontalen Lochreihen.

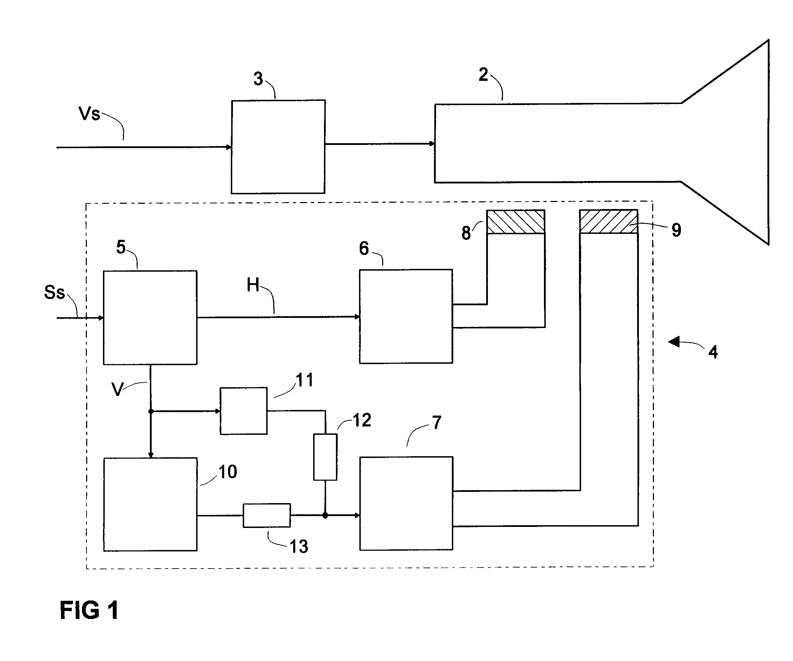

Zur Verdeutlichung der Erfindung wird im folgenden auf Figur 1 verwiesen. Eine Monitoranordnung umfaßt im wesentlichen eine Lochmasken-Farbbildröhre 2, welcher über einen Videoverstärker 3 ein Videosignal Vs zuführbar ist, und eine Einrichtung 4 zur Ablenkung des Elektronenstrahls in vertikaler und horizontaler Richtung. Die Einrichtung 4 weist eine Synchronisationsschaltung 5 auf, welche aus einem Sychronsignalgemisch Ss horizontal- und vertikalfrequente Ablenksignale H, V erzeugt. Weiterhin ist die Einrichtung 4 mit Horizontal- und Vertikalendstufen 6, 7, Horizontal- und Vertikalablenkspulen 8, 9 und einem der Vertikalendstufe 7 vorgeschalteten Sägezahngenerator 10 versehen. Diese Bestandteile der Monitoranordnung sind an sich bekannt und werden daher nicht näher erläutert. Weitere für den Betrieb der Röhre erforderliche Teile dieser Monitoranordnung, wie z. B. ein Elektronenstrahlerzeuger, sind zur Erläuterung der Erfindung ohne Bedeutung und deshalb in der Figur nicht dargestellt. Um die auf die Leuchtschicht der Röhre zu schreibenden Zeilen in vertikaler Richtung mit einer geeigneten Verschiebefrequenz um ein Viertel des Lochabstandes zu verschieben, weist die Einrichtung 4 ein Flip-Flop 11 auf, welchem die Synchronisationsschaltung 5 einen vertikalfrequenten Synchronisierimpuls zuführt. In einem praktischen Ausführungsbeispiel der Erfindung beaufschlagt das Flip-Flop 11 über einen Widerstand 12 die Vertikalendstufe 7 mit Rechteckimpulsen, deren Frequenz der halben Vertikalfrequenz entspricht. Diese Impulse und das von dem Sägezahngenerator 10 über einen Widerstand 13 der Vertikalendstufe 7 zugeführte vertikale Ablenksignal V bewirken eine Verschiebung der Zeilen in vertikaler Richtung um ein Viertel des Lochabstandes. Dadurch werden z. B. durch eine Umschaltung der Bildauflösung verursachte Interferenzstörungen vermieden, welche sich auf der Leuchtschicht der Röhre 2 als Moiré bemerkbar machen, da das Moiré um eine halbe Moiré-Wellenlänge verschoben wird. Die Helligkeitsminima und -maxima der Moiré-Struktur des Rasterbildes und des nächsten Rasterbildes fallen zusammen, und die Moiré-Strukturen kompensieren sich im zeitlichen Mittel.
Anstatt die Zeilen mit der halben Vertikalfrequenz um ein Viertel des Lochabstandes in vertikaler Richtung zu verschieben, können die Zeilen auch mit der halben Horizontalfrequenz oder mit einer anderen geeigneten Verschiebefrequenz verschoben werden. Wesentlich ist, daß die Intensität der Helligkeit auf der Leuchtschicht der Röhre in vertikaler Richtung im zeitlichen Mittel weitgehend gleichmäßig verteilt ist, wodurch für einen Betrachter kein Moiré mehr wahrzunehmen ist.

## Patentansprüche

1. Anordnung
- mit einer Lochmasken-Farbbildröhre (2), deren Lochmaske mehrere horizontale Lochreihen aufweist, welche die Elektronenstrahlen eines Elektronenstrahlerzeugers beim Schreiben der Zeilen auf eine Leuchtschicht der Röhre passieren, wobei der Abstand der Mitten zweier benachbarter Lochreihen gleich dem halben Lochabstand ist, und
- mit einer Einrichtung (4) zur Ablenkung des Elektronenstrahls in vertikaler und horizontaler Richtung,
**dadurch gekennzeichnet,**
- daß die Einrichtung (4) mit Mitteln (11, 12, 13) versehen ist, welche die Zeilen in vertikaler Richtung mit einer Verschiebefrequenz derart um ein Viertel des Lochabstandes verschieben, daß die Intensität der Helligkeit auf der Leuchtschicht der Röhre in vertikaler Richtung im zeitlichen Mittel weitgehend gleichmäßig verteilt ist.
